# EUROPÄISCHE PATENTSCHRIFT

(11) **EP 3 234 591 B1**
(45) Veröffentlichungstag und Bekanntmachung des Hinweises auf die Patenterteilung: **19.06.2019**
(21) Anmeldenummer: 15797603.6
(22) Anmeldetag: 20.11.2015
(51) Int. Cl.: G01N 30/95, G01N 21/59, H04N 1/024, H04N 1/028, H04N 1/04, G01N 21/17, G01N 21/31, G02B 21/06, G02B 21/26, G02B 21/36

(54) **VERFAHREN UND VORRICHTUNG ZUM OPTISCHEN ERFASSEN EINER CHROMATOGRAFISCHEN PROBE**
METHOD AND DEVICE FOR OPTICALLY SENSING A CHROMATOGRAPHIC SPECIMEN
PROCÉDÉ ET DISPOSITIF DE DÉTECTION OPTIQUE D'UN ÉCHANTILLON CHROMATOGRAPHIQUE

(30) Priorität: 19.12.2014 EP 14004313; 26.03.2015 EP 15000889
(43) Veröffentlichungstag der Anmeldung: 25.10.2017
(73) Patentinhaber: Merck Patent GmbH, 64293 Darmstadt (DE)
(72) Erfinder: SCHULZ, Michael, 64285 Darmstadt (DE); OBERLE, Michaela, 63110 Rodgau (DE); INGENDOH, Thomas, 42281 Wuppertal (DE)
(86) Internationale Anmeldenummer: PCT/EP2015/002336
(87) Internationale Veröffentlichungsnummer: WO 2016/096078

(56) Entgegenhaltungen:
- WO-A1-00/40957
- WO-A2-2006/108137
- CN-Y- 2 884 737
- DE-T2- 69 910 065
- US-A- 6 096 205
- US-A- 6 130 440
- US-A1- 2014 154 792

## Beschreibung

Die Erfindung betrifft ein Verfahren zum optischen Erfassen einer chromatografischen Probe, wobei eine die Probe aufweisende Probenplatte mit Licht einer ersten Beleuchtungseinrichtung beleuchtet und das von der Probenplatte abgestrahlte Licht von einer optischen Detektoreinrichtung, die zeilenförmig oder feldförmig abliest, erfasst wird.

Die Dünnschichtchromatografie ist ein Analyseverfahren, mit dem einzelne Substanzen und die Zusammensetzung von Proben untersucht werden können. Die zu untersuchende Probe wird in einem Lösungsmittel gelöst und typischerweise punkt- oder strichförmig auf eine dünne Schicht eines geeigneten, sehr feinkörnigen Materials wie beispielsweise Kieselgel oder Zellulose aufgetragen. Die als stationäre Phase oder Trennschicht bezeichnete Materialschicht ist ihrerseits möglichst gleichmäßig auf eine Platte, üblicherweise eine Trägerplatte oder Trägerfolie aus Kunststoff, Aluminium, Blech oder Glas aufgetragen. Die beschichtete Platte wird auch Probenplatte oder DC-Platte genannt. Auf einer Probenplatte werden oftmals mehrere verschiedene Proben nebeneinander angeordnet. Nach dem Auftragen der zu messenden Proben wird ein Rand der Probenplatte in ein geeignetes Fließmittel eingetaucht oder damit benetzt. Als Fließmittel können in Abhängigkeit von der jeweilige Probe und dem Trennschichtmaterial beispielsweise unpolare organische Lösungsmittel oder aber polare Lösungsmittel verwendet werden, oder Mischungen davon. Das Fließmittel wandert auf Grund von Kapillarkräften durch das feinporige Trägermaterial, wobei die in einer Probe enthaltenen Substanzen je nach Substanz unterschiedlich schnell mitwandern und dadurch in Wanderrichtung des Fließmittels räumlich aufgetrennt und separiert werden und so eine Probenbahn erzeugen. Durch eine in den meisten Fällen optische Auswertung, der in der Wanderrichtung des Fließmittels räumlich aufgetrennten Probenanteile können durch einen Vergleich mit Referenzproben einzelne Substanzen identifiziert und gegebenenfalls auch quantitativ ausgewertet werden.

Für die chromatografische Auswertung einer Probenplatte können für derartige Auswertungen optimierte Densitometer verwendet werden, die auch als "TLC-Scanner" bezeichnet werden. Die auf einer Probenplatte angeordneten und chromatografisch aufgetrennten Proben werden dabei nacheinander zeilenweise mit einem punkt- oder streifenförmigen Lichtfleck beleuchtet, bzw. abgetastet und das von der Probenplatte abgestrahlte Licht mit einem Densitometer erfasst. Zur Beleuchtung der Probenplatten kann Licht mit verschiedenen Wellenlängen bzw. Wellenlängenbereichen verwendet werden, wobei neben einer Beleuchtung mit sichtbarem Licht insbesondere eine Beleuchtung mit UV-Licht eingesetzt wird. Dabei können auch UV-Absorptionsmessungen oder Lumineszenzlichtmessungen durchgeführt werden, um zusätzliche Informationen über die in der Probe enthaltenen Substanzen zu erhalten.

Die üblicherweise verwendeten handelsüblichen Densitometer ermöglichen eine präzise quantitative Auswertung der einzelnen Proben auf einer Probenplatte. Das optische Erfassen von mehreren Proben, die auf einer Probenplatte angeordnet und anschließend chromatografisch aufgetrennt wurden, ist zeitaufwendig, da der für die Beleuchtung der Probe verwendete Lichtfleck nacheinander für jede Probe über die dieser Probe zugeordnete Trennstrecke geführt werden muss und kontinuierlich das von der Probenplatte abgestrahlte Licht erfasst werden muss, um anschließend ausgewertet werden zu können. Zudem müssen zwischen einzelnen Messungen mit verschiedenen Wellenlängenbereichen die jeweils verwendeten Beleuchtungseinrichtungen frühzeitig aktiviert und im Falle von UV-Beleuchtungseinrichtungen regelmäßig auch vorgewärmt werden, um eine möglichst gleichmäßige Beleuchtung der Probenplatte während der gesamten Messdauer zu ermöglichen. Die optische Erfassung einer Probenplatte mit 5 bis 10 Proben dauert deshalb üblicherweise einige Minuten und bei einem Wechsel der Beleuchtung noch länger. Zudem sind derartige Densitometer teuer in der Herstellung und aufwendig während des Betriebs.

Um eine rasche und kostengünstige Auswertung einer Probenplatte zu ermöglichen, kann mit einer geeigneten Kamera eine Gesamtbildaufnahme der Probenplatte aufgenommen werden. Die von der Probenplatte erfasste Gesamtbildaufnahme kann anschließend durch geeignete Auswerteverfahren ausgewertet werden. Es hat sich gezeigt, dass eine derartige Gesamtbildaufnahme sehr schnell optisch erfasst werden kann und die Auswertung mit einer daran angepassten Software ebenfalls rasch und kostengünstig durchgeführt werden kann. Allerdings ist es derzeit nur mit größerem Fehler möglich und insbesondere für die Beleuchtung mit UV-Licht sehr kostenaufwendig, die Probenplatte ausreichend homogen und über mehrere Messungen hinweg gleichbleibend auszuleuchten, um eine quantitative Auswertung der Gesamtbildaufnahme zu ermöglichen.

Aus der Praxis ist es bekannt, mit einer zeilenförmigen optischen Detektoreinrichtung das von der Probenplatte abgestrahlte Licht zu erfassen. Für die optische Erfassung einer Probenplatte müssen die zeilenförmige Detektoreinrichtung und die Probenplatte relativ zueinander verlagert werden. Allerdings können mit der zeilenförmigen Detektoreinrichtung gleichzeitig alle nebeneinander auf der Probenplatte angeordneten Proben erfasst werden, sodass im Vergleich zu den handelsüblichen TLC-Scannern eine deutlich raschere Bildaufnahme durchgeführt werden kann.

Um eine derartige optische Erfassung einer Probenplatte durchzuführen, kann die Probenplatte mit der beschichteten und mit den Proben versehenen Seite nach unten gerichtet auf einen handelsüblichen Flachbettscanner aufgelegt werden. Um an Stelle der üblicherweise mit sichtbarem Licht erfolgenden Beleuchtung und optischen Erfassung der Probenplatte auch eine Beleuchtung mit UV-Licht zu ermöglichen sind aus der Praxis modifizierte und mit einer UV-Lichtquelle versehene Flachbettscanner bekannt. Es hat sich jedoch gezeigt, dass die Handhabung der Probenplatte und insbesondere das Auflegen der Probenplatte mit der beschichteten Seite auf die Glasabdeckung eines Flachbettscanners problematisch sind und zu Kontaminationen führen. Zudem sind handelsübliche Scanner durch die Glasplatte nicht für UV-Detektion bei 254 nm geeignet. Die Verlagerung der Beleuchtungseinrichtung und der damit kombinierten zeilenförmigen optischen Detektoreinrichtung erfolgt bei den handelsüblichen Flachbettscannern nicht ausreichend gleichmäßig und präzise, sodass eine quantitative Auswertung der mit derartigen Flachbettscannern aufgenommenen Bildaufnahmen für eine zuverlässige quantitative Auswertung nicht optimal sind. Zudem dauert eine vollständige optische Erfassung einer Probenplatte vergleichsweise lange, insbesondere bei einem Wechsel der Beleuchtung zwischen zwei aufeinanderfolgenden Bildaufnahmen.

US 6130440 A, DE 69910065 T2 und WO0040957 A1 beziehen sich auf Verfahren und Vorrichtungen, um eine chromatographische Probe optisch zu erfassen.

Es wird deshalb als eine Aufgabe der vorliegenden Erfindung angesehen, ein Verfahren der eingangs genannten Gattung zur optischen Erfassung einer chromatographischen Probe so auszugestalten, dass mit möglichst geringem Aufwand in kurzer Zeit eine optische Bilderfassung einer Probenplatte aufgenommen werden kann, die eine möglichst zuverlässige quantitative Auswertung ermöglicht. Zudem sollte die Handhabung der Probenplatte während der Durchführung eines Messvorgangs möglichst benutzerfreundlich sein.

Diese Aufgabe wird durch das Verfahren gemäp Anspruch 1 gelöst. Eine entprechende Vorrichtung dafür wird im Anspruch 7 definiert.

In einer bevorzugten Ausführungsform wird zudem in einer nachfolgenden weiteren Verlagerungsrichtung, die typischerweise der ersten Verlagerungsrichtung entspricht, mit einer dritten Beleuchtungseinrichtung beleuchtet und ein drittes Messbild der Probenplatte aufgenommen.

Es ist genauso möglich, nach der Aufnahme des dritten Messbildes durch Verlagerung in weitere Verlagerungsrichtungen und Beleuchtung mit weiteren Beleuchtungseinheiten noch weitere Messbilder aufzunehmen. Dabei sind die aufeinanderfolgenden Verlagerungsrichtungen bevorzugt jeweils entgegengesetzt.
Ein Messbild ist dabei erfindungsgemäß sowohl eine Bildaufnahme, beispielsweise ein Bild einer DC Platte bei Beleuchtung mit sichtbarem Licht (Wellenlänge zwischen 370 und 800 nm) oder UV Licht (Wellenlänge kleiner 370 nm) verschiedener Wellenlängen oder Wellenlängenteilbereiche, oder ein Messdatensatz wie beispielsweise ein Spektrum, das mit einem Spektrometer aufgenommen wird.

Durch den Einsatz einer Detektoreinrichtung, die zeilenförmig oder feldförmig abliest, kann die Messung gegenüber punktförmig messenden Vorrichtungen beschleunigt werden. Eine zeilenförmige Erfassung bedeutet erfindungsgemäß, dass in einer Ausdehnungsrichtung mehrere nebeneinander liegende Bildpunkte zugleich erfasst werden. Feldförmige Erfassung bedeutet erfindungsgemäß, dass nicht nur eine Reihe nebeneinander liegender Bildpunkte erfasst wird, wie das bei der zeilenförmigen Erfassung der Fall ist, sondern mehrere nebeneinander liegende Reihen dieser Bildpunkte zugleich, so dass ein Feld von Bildpunkten erfasst wird, das in zwei senkrecht zueinander liegenden Richtungen jeweils zwei oder mehrere Bildpunkte umfasst. Eine besonders bevorzugte Detektoreinrichtung, die zeilenförmig oder feldförmig abliest ist ein CCD Sensor. Im folgenden wird eine Detektoreinrichtung, die zeilenförmig oder feldförmig nebeneinanderliegende Bildpunkte erfassen kann, auch zeilenförmige oder feldförmige Detektoreinrichtung genannt.

Diese Art der Detektion ist insbesondere möglich, da sich die Beleuchtungseinrichtungen über die gesamte Breite der zu beleuchtenden Probenplatte erstrecken. Auf diese Weise erfolgt eine sehr homogene Ausleuchtung und Beleuchtungsstärke über die gesamte Breite der Probenplatte. Die Beleuchtungseinrichtungen können dabei beispielweise röhrenförmige Lichtquellen sein oder punktförmige Lichtquellen, die in einer Reihe angebracht sind. Die homogene Ausleuchtung kann bevorzugt zusätzlich unterstützt werden durch optische Bauteile, bevorzugt lichtbrechende und/oder streuende Elemente wie Streuscheiben oder Linsen (z.B. Stablinsen). Werden optische Bauteile zur Unterstützung der homogenen Ausleuchtung verwendet, kann typischerweise der Abstand der punktförmigen Lichtquellen vergrößert werden. Der Fachmann ist in der Lage, den Abstand der punktförmigen Lichtquellen mit oder ohne Zusatz von optischen Bauteilen so zu wählen, dass eine ausreichend homogene Beleuchtung über die gesamte Breite der Probenplatte erfolgt.

Weiterhin befinden sind die Beleuchtungseinrichtungen und die Detektoreinrichtung oberhalb der Probenplatte, so dass die nach oben gerichtete Seite der Probenplatte vermessen wird.

Es werden zwei oder mehr Beleuchtungseinrichtungen eingesetzt. Bevorzugt sind 3 Beleuchtungseinrichtungen. Jede Beleuchtungseinrichtung strahlt in einem bestimmten Wellenlängenteilbereich, d.h. sie erzeugt einen bestimmten Wellenlängenteilbereich. Besonders bevorzugt sind dies Weißlicht LEDs für den sichtbaren Bereich, UV-LEDs mit 366 nm für den UV-A Bereich und Quecksilberdampflampen für den UV-C Bereich (254 nm).

Beispiele für alternative Beleuchtungseinrichtungen sind LEDs mit anderen Wellenlängen, Halogenlampen oder Deuteriumlampen.

Der Wellenlängenteilbereich der Beleuchtungseinrichtungen kann zusätzlich durch z.B. Filter eingeschränkt werden.

Im Folgenden wird zur Vereinfachung zumeist von zwei Beleuchtungseinrichtungen und zwei Messschritten gesprochen. Der Fachmann kann die hierzu gemachten Angaben auch auf erfindungsgemäß mit umfasste Vorrichtungen und Verfahren mit drei oder mehr Messschritten und entsprechend drei oder mehr Beleuchtungseinrichtungen übertragen.

Durch die Aufnahme von zwei oder mehr Messbildern, die mit zwei oder mehr verschiedenen Beleuchtungseinrichtungen erzeugt werden, kann die Auswertung der Messbilder miteinander kombiniert und die Analyse durch die zusätzlichen Informationen verbessert werden.

Werden Beleuchtungseinheiten eingesetzt, die eine Aufwärmzeit benötigen, werden diese bevorzugt bereits vor ihrem Einsatz, d.h. z.B. während eines vorangehenden Messschritts aktiviert und vorgewärmt. Wenn im Falle einer Beleuchtungseinrichtung, die Aufwärmzeit benötigt, bevorzugt in einem Vorbereitungsschritt diese Beleuchtungseinrichtung bereits aktiviert wird und vorwärmen kann, bevor oder während zunächst mit der ersten Beleuchtungseinrichtung ein erstes Messbild aufgenommen wird, ist vor der Aufnahme des zweiten Messbildes mit der vorgewärmten Beleuchtungseinheit keine gesonderte Aufwärmzeit erforderlich. Mit der bereits vorgewärmten zweiten Beleuchtungseinrichtung kann während der Erfassung des zweiten Messbildes eine deutlich homogenere und gleichmäßigere Beleuchtung der Probenplatte erreicht werden, wodurch sich die Zuverlässigkeit und Präzision einer quantitativen Auswertung des zweiten Messbildes und damit der gesamten quantitativen Analyse der Probenplatte verbessert. Zudem kann die optische Erfassung der Probenplatte in kurzer Zeit durchgeführt werden, da keine oder lediglich geringe Wartezeiten vor Beginn einer Aufnahme eines ersten oder eines zweiten Messbildes erforderlich sind.

Während einer Aufnahme eines Messbildes werden nicht die Detektoreinrichtung und die Beleuchtungseinrichtungen verlagert, sondern die ein deutlich geringeres Eigengewicht aufweisende Probenplatte verfahren. Der konstruktive Aufwand für eine rasche und präzise Verlagerung der leichten Probenplatte ist erheblich geringer als derjenige Aufwand, der für eine vergleichbar präzise und schnelle Verlagerung der Detektoreinrichtung und der Beleuchtungseinrichtungen erforderlich wäre. Es kann mit einer geeignet ausgestalteten Antriebseinrichtung zum Verfahren der Probenplatte erreicht werden, dass die Verfahrgeschwindigkeit der Probenplatte nicht durch die Ausgestaltung der Verfahreinrichtung, sondern lediglich durch die maximal mögliche optische Erfassungsgeschwindigkeit der Detektoreinrichtung begrenzt ist.

Sind während eines Messschritts mehrere Beleuchtungseinrichtungen, d.h. mehrere Arten von Lichtquellen aktiv, so kann die Messung gestört werden, da bei der Aufnahme eines Messbildes natürlich nur z.B. die Lumineszenz oder Reflexion detektiert werden soll, die von einer Beleuchtungseinrichtung erzeugt wird.

Bevorzugt ist daher im Falle von Beleuchtungseinrichtungen, die keine Vorwärmzeit benötigen, wie z.B. LEDs, nur jeweils eine Beleuchtungseinrichtung aktiv. Ist dies z.B. wegen zu langer Aufwärmzeiten der Beleuchtungseinrichtung nicht sinnvoll oder möglich, muss der Einfluss der im Messschritt nicht benötigten Beleuchtungseinrichtung abgeschirmt werden.

Einer Ausgestaltung des Erfindungsgedankens zu Folge ist vorgesehen, dass während des ersten Messschritts von der zweiten Beleuchtungseinrichtung erzeugtes Licht von der Detektoreinrichtung abgeschirmt wird. Zu diesem Zweck kann im Bereich der Detektoreinrichtung oder zwischen der Detektoreinrichtung und der zweiten Beleuchtungseinrichtung eine lichtundurchlässige Abschirmung angeordnet sein. Die Abschirmung kann schwenkbar oder linear verlagerbar sein. Wenn die zweite Beleuchtungseinrichtung eine UV-Lichtquelle ist, was wegen der üblicherweise erforderlichen Vorwärmzeiten von handelsüblichen UV-Quellen vorteilhaft ist, kann die Detektoreinrichtung beispielsweise während der Aufnahme des ersten Messbildes mit einer für UV-Licht undurchlässigen Abschirmeinrichtung abgedeckt und dadurch das UV-Licht von der Detektoreinrichtung ferngehalten werden.

Erfindungsgemäß bevorzugt ist, das Licht von Beleuchtungseinrichtungen, die in einem Messschritt nicht benötig werden, während dieses Messschritts von der Probenplatte und der Detektoreinrichtung abzuschirmen.

Dazu wird beispielsweise während des ersten Messschritts das von der zweiten Beleuchtungseinrichtung erzeugte Licht nicht nur von der Detektoreinrichtung, sondern auch von der Probenplatte abgeschirmt und die Beleuchtung der Probenplatte erfolgt ausschließlich durch die erste Beleuchtungseinrichtung. Auf diese Weise können unerwünschte Störungen und Überlagerungen eines ersten Messbildes im z.B. sichtbaren Wellenlängenbereich, das durch Beleuchtung mit sichtbarem Licht der ersten Beleuchtungseinrichtung erzeugt werden soll, mit dem von der zweiten Beleuchtungseinrichtung abgestrahlten z.B. UV-Licht und einem gegebenenfalls dadurch in der Probe erzeugtem Fluoreszenzlicht vermieden werden.

Gemäß einer besonders vorteilhaften Ausgestaltung des Erfindungsgedankens ist vorgesehen, dass die zweite Verlagerungsrichtung entgegengesetzt zu der ersten Verlagerungsrichtung ist und jede weitere Verlagerungsrichtung wiederum entgegengesetzt zu der vorangehenden ist. So kann die Probenplatte für die Aufnahme des ersten Messbildes in einer ersten Richtung unter der Detektoreinrichtung und den Beleuchtungseinrichtungen hindurch verfahren werden, um anschließend in entgegengesetzter Richtung wieder zurückverfahren zu werden, während das zweite Messbild aufgenommen wird. In diesem Fall sind keine zusätzlichen Verfahrwege und keine entsprechenden Wartezeiten zwischen aufeinanderfolgenden Aufnahmen von Messbildern erforderlich.
In einer bevorzugten Ausführungsform des erfindungsgemäßen Verfahrens ist vorgesehen, dass Informationen aus dem ersten Messbild für die Aufnahme des zweiten Messbildes verwenden werden. Insbesondere sind dies Informationen betreffend die Lage der Probenplatte, Kalibrierung der Lampen oder den Weißabgleich. Die Verarbeitung der Informationen erfolgt bevorzugt über eine entsprechende Auswertesoftware.

Weiter beschrieben wird eine Vorrichtung zum optischen Erfassen einer chromatografischen Probe mit einer Aufnahmeeinrichtung für eine Probenplatte, mit einer ersten Beleuchtungseinrichtung und mit einer optischen Detektoreinrichtung, die zeilenförmig oder feldförmig abliest.

Es ist vorgesehen, dass die Aufnahmeeinrichtung einen relativ zu der Detektoreinrichtung in einer ersten Verlagerungsrichtung verlagerbaren Träger zur Aufnahme der Probenplatte aufweist, dass die erste Beleuchtungseinrichtung und eine zweite Beleuchtungseinrichtung sich jeweils bevorzugt über eine maximale Breite einer in der Aufnahmeeinrichtung aufnehmbaren Probenplatte erstrecken und jeweils parallel zu der zeilenförmigen oder feldförmigen Detektoreinrichtung und quer zu der ersten Verlagerungsrichtung ausgerichtet sind, und dass die Vorrichtung bevorzugt so ausgestaltet ist, dass während einer Aufnahme eines Messbildes die Probe nur mit einem Wellenlängenteilbereich beleuchtet wird.

Als Träger zur Aufnahme der Probenplatte sind beispielsweise ein vor- und rückwärts betreibbares Transportband, eine verlagerbare Auflageplatte oder bevorzugt eine Schublade geeignet.

Ein Transportband kann die Probenplatte schnell und präzise in eine Verlagerungsrichtung transportieren und in einem zweiten Messschritt in die entgegengesetzte Verlagerungsrichtung zurücktransportieren.

Eine Schublade, in die eine Probenplatte eingelegt ist, kann mit geringem konstruktivem Aufwand schnell und präzise verlagert werden. Das Einlegen einer Probenplatte in eine Schublade und die anschließende Herausnahme der Probenplatte nach der Durchführung der Messungen kann einfach und benutzerfreundlich gestaltet werden. Durch geeignete Positionierungshilfen wie beispielsweise federbetätigte Klemmen, Anschlagelemente in Form von Stegen oder Erhebungen oder rastend verlagerbare Anschlagselemente können Probenplatten mit unterschiedlichen Formaten, bzw. Abmessungen in einfacher Weise zuverlässig innerhalb der Schublade positioniert und fixiert werden.
Die Schublade kann mit einer Ausnehmung zur Aufnahme von Probenplatten versehen sein oder ohne Ausnehmung ausgeführt sein. Bei einer Schublade ohne Ausnehmung wird die Probenplatte auf die flache Schublade aufgelegt. Gegebenenfalls weist die Schublade Stege oder Erhebungen zur Fixierung der Probenplatte auf. Ein Verrutschen der Probenplatte oder eine schief aufgelegte Probenplatte kann falls notwendig zusätzlich durch eine geeignete Bildaufnahme-Software ausgeglichen werden. Es können ein oder mehrere Probenplatten zugleich aufgelegt und vermessen werden.

Durch die Ausgestaltung und Ausrichtung der zeilenförmigen oder feldförmigen Detektoreinrichtung und insbesondere der ersten und zweiten Beleuchtungseinrichtung kann erreicht werden, dass die Schublade mit der darin aufgenommenen Probenplatte lediglich einmal quer zu der Detektoreinrichtung über die Länge der Probenplatte verlagert werden muss, um ein vollständiges Messbild der Probenplatte aufnehmen zu können. Durch die sich über die gesamte Breite der Probenplatte erstreckenden Beleuchtungseinrichtungen kann eine sehr gleichmäßige und konstante Ausleuchtung der Probenplatte erreicht werden.

Die Vorrichtung ist so ausgestaltet, dass während einer Aufnahme eines Messbildes die Probe nur mit einem Wellenlängenteilbereich beleuchtet wird, um durch einen Wechsel des Wellenlängenteilbereichs zwischen zwei aufeinanderfolgenden Messbildern in kurzer Zeit zwei verschiedene Messbilder mit sich ergänzenden Informationen für eine verbesserte Auswertung, der auf der Probenplatte befindlichen Proben zu ermöglichen.

Zu diesem Zweck kann vorgesehen sein, dass die Vorrichtung eine Abschirmeinrichtung aufweist, mit der während einer Aufnahme eines Messbildes ein Wellenlängenteilbereich von der Detektoreinrichtung abgeschirmt wird. Die Abschirmung kann beispielsweise durch lichtundurchlässige Abschirmplatten oder durch Vorrichtungen bewirkt werden, die in einem Bereich um die Detektoreinrichtung wahlweise so angeordnet werden können, dass entweder nur von der ersten Beleuchtungseinrichtung oder nur von der zweiten Beleuchtungseinrichtung Licht auf die Probenplatte und in die Detektoreinrichtung gelangen kann. Es ist ebenfalls denkbar, dass während aufeinander folgender Aufnahmen von Messbildern durch die Verwendung geeigneter Filtervorrichtungen verschiedene Wellenlängenteilbereiche von der Detektoreinrichtung abzuschirmen.

Alternativ oder zusätzlich hierzu ist es ebenfalls möglich, während einer Aufnahme eines Messbildes einen Wellenlängenteilbereich, der von der ersten Beleuchtungseinrichtung oder von der zweiten Beleuchtungseinrichtung und/oder von weiteren Beleuchtungseinrichtungen erzeugten Beleuchtung von der Probenplatte abzuschirmen. Auf diese Weise können auch unerwünschte Streulichteffekte und Lumineszenzlichteffekte reduziert bzw. vollständig vermieden werden. Bevorzugt erfolgt die Aufnahme eines Messbildes derart, dass nur der von einer Beleuchtungseinrichtung erzeugte Wellenlängenteilbereich auf die Probenplatte trifft. Alle anderen aktiven Beleuchtungseinrichtungen werden abgeschirmt. Es ist auch möglich, durch entsprechende Filter den Wellenlängenteilbereich der Beleuchtungseinrichtung, die in dem jeweiligen Messschritt die Probenplatte beleuchtet, weiter einzuschränken.

Es ist ebenfalls denkbar, dass die Detektoreinrichtung nicht nur eine sondern zwei und mehrere verschiedene optische Sensoreinrichtungen aufweist, die in gleichen oder bevorzugt verschiedenen bzw. mindestens teilweise nicht überlappenden Wellenlängenteilbereichen empfindlich sind. Auf diese Weise können bei einer gleichzeitigen oder nacheinander durchgeführten Beleuchtung der Probenplatte durch die erste Beleuchtungseinrichtung und durch die zweite Beleuchtungseinrichtung ein erstes Messbild mit einer ersten Sensoreinrichtung und ein zweites Messbild mit einer zweiten Sensoreinrichtung aufgenommen werden. Beispiele für Sensoreinrichtungen sind CCD Sensoren (CCD bedeutet charge-coupled device), Kontakt Bild Sensoren (Contact Image Sensoren) und Mikrospektrometer zur Aufnahme von Substanzspektren. Bevorzugt enthält die Detektoreinrichtung zumindest einen CCD Sensor.

Zwischen der Sensoreinrichtung der Detektoreinheit, z.B. dem CCD Sensor, und der Probenplatte befinden sich bevorzugt ein oder mehrere optische Elemente wie Objektive und Spiegel, um das Bild der Probenplatte auf der Sensoreinrichtung abzubilden.

Bevorzugt ist vorgesehen, dass die zweite Beleuchtungseinrichtung, wenn sie Aufwärmzeit benötigt, bereits aktiviert ist und vorgewärmt wird, während zunächst mit der ersten Beleuchtungseinrichtung ein erstes Messbild aufgenommen wird, bevor mit der zweiten Beleuchtungseinrichtung ein zweites Messbild aufgenommen wird.

In einer bevorzugten Ausführungsform ist vorgesehen, dass das Licht der Beleuchtungseinrichtungen bevorzugt ausschließlich zur Probenplatte gerichtet ist. Das kann beispielsweise erfolgen, indem die Lichtquellen in ein U-Profil oder einen Kasten eingesetzt werden, der nur zur Seite der Probenplatte hin offen ist. Die innere, zur Lichtquelle gerichtete Wandung des U-Profils oder Kastens kann zusätzlich beschichtet werden, um die Reflexionen zu erhöhen. Vorteil dieser Ausführungsform ist eine direkte Ausrichtung des Lichtes auf den Messbereich ohne Streulichteinflüsse durch ungerichtete Lichtstreuung.

Um optische Abbildungs- und Messfehler möglichst gering zu halten ist bevorzugt vorgesehen, dass die Detektoreinrichtung weniger als 100 Millimeter, vorzugsweise weniger als 30 Millimeter oberhalb des Trägers, z.B. einer Oberseite der Schublade, angeordnet ist. In gleicher Weise können auch die erste Beleuchtungseinrichtung und die zweite Beleuchtungseinrichtung weniger als 100 Millimeter, vorzugsweise weniger als 30 Millimeter oberhalb des Trägers, z.B. der Oberseite der Schublade, angeordnet sein. Dadurch kann die Vorrichtung sehr kompakt ausgestaltet sein. Als Oberseite der Schublade wird hierbei die Auflagefläche der Schublade für die Probenplatte bezeichnet.

Ein unerwünschter Austritt von UV-Licht während einer Messung kann durch geeignete Abschirm- und Abdichtungseinrichtungen weitestgehend vermieden werden, wodurch die Betriebssicherheit der Vorrichtung während der Durchführung von Messungen erhöht wird.

Gemäß einer besonders vorteilhaften Ausgestaltung des Erfindungsgedankens ist vorgesehen, dass die Vorrichtung ein Gehäuse aufweist, in dem zumindest die erste Beleuchtungseinrichtung und die zweite Beleuchtungseinrichtung, die optische Detektoreinrichtung und eine Antriebseinrichtung für den Träger, wie z.B. eine Schublade, angeordnet sind.
Weiterhin ist bevorzugt, dass das Gehäuse im Falle einer Schublade als Träger einen Schubladenschlitz aufweist, durch den hindurch die Schublade zumindest teilweise aus dem Gehäuse herausgefahren und in das Gehäuse eingefahren werden kann. In die aus dem Gehäuse zumindest teilweise herausgefahrene Schublade kann eine Probenplatte einfach eingelegt und anschließend einfach wieder entnommen werden. Das Gehäuse kann sehr kompakt ausgestaltet sein, sodass die Vorrichtung gegebenenfalls auch transportabel ausgestaltet und beispielsweise in einem Koffer oder in einer Kiste angeordnet sein und dadurch einfach und geschützt transportiert werden kann.

Während der Durchführung einer Messung sind die erste Beleuchtungseinrichtung, die zweite Beleuchtungseinrichtung, optionale weitere Beleuchtungseinrichtungen und die optische Detektoreinrichtung durch das Gehäuse von der Umgebung abgeschirmt, sodass eine unerwünschte Beeinträchtigung oder Verfälschung der einzelnen Aufnahmen von Messbildern durch Umgebungslicht oder Umgebungseinflüsse weitestgehend ausgeschlossen werden kann. In gleicher Weise kann auch gewährleistet werden, dass während der Durchführung einer Messung mit UV-Beleuchtung, das von der hierfür verwendeten Beleuchtungseinrichtung erzeugte UV-Licht nicht unbeabsichtigt in die Umgebung abgestrahlt werden kann.

Durch eine optional vorhandene geeignete Sensoreinrichtung an oder in dem Schubladenschlitz kann erfasst werden, ob sich eine Probenplatte in der Schublade befindet. Zudem kann durch eine geeignete Ausgestaltung der Sensoreinrichtung auch die Größe der Probenplatte erfasst werden, sodass die Aufnahme und Auswertung der Messbilder auf die Abmessungen, der in der Schublade eingelegten Probenplatte beschränkt und das Verfahren dadurch beschleunigt werden kann.

Bevorzugt erfolgt die Erfassung der Lage der Probenplatte mit einer Bildanalysesoftware. Beim Erfassen des ersten Messbildes, das bevorzugt durch Beleuchtung mit weißem Licht entsteht, erkennt die Bildanalysesoftware wo und mit welchen Abmessungen sich die Probenplatte befindet. In einem weiteren Schritt wird die gefundene Probenplatte mit Hilfe der Analyse der Kanten des Bildes virtuell gerade gerichtet. Auf diese Weise wird ein genaues Ausrichten der Probenplatte beim Einlegen auf den Träger unnötig. Dadurch, dass auch die Größen der Probenplatten erfasst werden, kann die Aufnahme und Auswertung der Messbilder auf die Abmessung der eingelegten Probenplatte beschränkt werden. Dadurch wird das Verfahren beschleunigt.

Bevorzugt kann die Bildanalysesoftware weiterhin eine Winkelkorrektur von Probezonen innerhalb einer Probenbahn vornehmen. Auf diese Weise können auch von der Fließrichtung des Laufmittels abweichende, schiefe Probenbahnen als solche erfasst werden.

Eine besonders kompakte Bauweise wird dadurch ermöglicht, dass das Gehäuse auf einer dem Schubladenschlitz gegenüberliegenden Gehäuseseite einen Austrittsschlitz für die Schublade aufweist. Das Gehäuse muss dem zu Folge nicht so groß sein, dass die für die Aufnahme der Probenplatte vorgesehene Schublade vollständig innerhalb des Gehäuses gelagert werden kann. Es ist vielmehr möglich und im Hinblick auf ein möglichst kleines, leichtes und transportables Messgerät zweckmäßig, dass das Gehäuse an den Raumbedarf der Beleuchtungseinrichtungen, der optischen Detektoreinrichtung und der Antriebseinrichtung für die Schublade angepasst und darauf beschränkt ist. Das Gehäuse kann eine deutlich kleinere Grundfläche als die Schublade aufweisen, die lediglich auf einer Seite durch den Schubladenschlitz eingezogen und an der Detektoreinrichtung vorbeitransportiert werden muss, jedoch auf einer gegenüberliegenden Seite durch einen Austrittsschlitz wieder austreten kann, da lediglich ein streifenförmiger oder feldförmiger Bereich der Probenplatte beleuchtet werden muss und sich für die Erfassung eines Messbildes in einem Erfassungsbereich der Detektoreinrichtung befinden muss.

Durch die Anordnung der Detektoreinrichtung zwischen der ersten Beleuchtungseinrichtung und der zweiten Beleuchtungseinrichtung können sowohl eine sehr kompakte Bauweise als auch eine gleichmäßige Ausleuchtung und präzise Erfassung des von der Probenplatte abgestrahlten Licht mit der Detektoreinrichtung erreicht werden.

Es ist grundsätzlich möglich, dass zusätzlich zu der ersten Beleuchtungseinrichtung und der zweiten Beleuchtungseinrichtung weitere Beleuchtungseinrichtungen neben oder in einem Bereich in der Nähe der Detektoreinrichtung angeordnet sind, um mit drei oder mehr verschiedenen Wellenlängenteilbereichen oder mittels verschiedener Methoden Messungen durchzuführen und Messbilder aufnehmen zu können.

Nachfolgend werden Ausführungsbeispiele des Erfindungsgedankens näher erläutert, die in der Zeichnung dargestellt sind. Es zeigt:
Figur 1 ist eine schematische Darstellung einer Vorrichtung zum optischen Erfassen einer mehrere Proben aufweisenden Probenplatte,
Figur 2 ist eine schematische Schnittansicht, der in Figur 1 gezeigten Vorrichtung längs einer Schnittebene II - II in Figur 1
Figur 3 ist eine Schnittansicht, der in den Figuren 1 und 2 gezeigten Vorrichtung längs einer Schnittebene III - III in Figur 2, wobei die Probenplatte vollständig in ein Gehäuse der Vorrichtung eingefahren ist,
Figur 4 ist eine schematische Darstellung eines Messkopfs der Vorrichtung mit einer Detektoreinrichtung und mit drei Beleuchtungseinrichtungen, und
Figur 5 ist eine schematische Darstellung eines abweichend ausgestalteten Messkopfs der Vorrichtung mit einer Detektoreinrichtung und mit zwei Beleuchtungseinrichtungen.

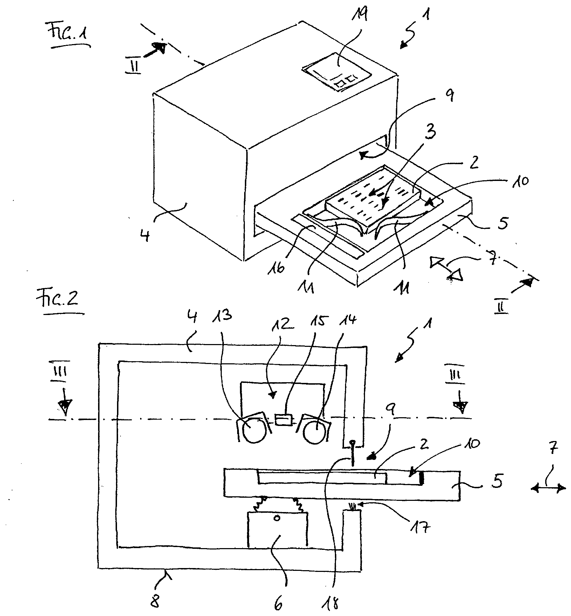

Eine in den Figuren 1 bis 3 exemplarisch dargestellte Vorrichtung 1 zum optischen Erfassen einer Probenplatte 2, auf der mehrere chromatografische Proben 3 angeordnet sind, weist ein Gehäuse 4 und eine darin verlagerbar gelagerte Schublade 5 auf. Die Schublade 5 kann mit einer Antriebseinrichtung 6 entlang einer Verlagerungsrichtung hin und her bewegt werden, die mit einem Pfeil 7 angedeutet ist. Dabei kann die Schublade 5 parallel zu einem Gehäuseboden 8 durch einen Schubladenschlitz 9 teilweise aus dem Gehäuse 4 heraus und zurück in das Gehäuse 4 aus- und eingefahren werden.

In den Figuren 1 und 2 ist die Schublade 5 in einem vollständig ausgefahrenen, bzw. teilweise ausgefahrenen Zustand dargestellt. Die Schublade 5 weist eine von oben zugängliche Ausnehmung 10 auf, in der sich die Probenplatte 2 befindet. Die Probenplatte 2 wird durch seitlich in der Ausnehmung 10 angeordnete Federzungen 11 in eine Ecke der Ausnehmung 10 gedrückt und dadurch zuverlässig innerhalb der Ausnehmung 10 positioniert, die größer als die darin befindliche Probenplatte 2 ist. Auf diese Weise ist es möglich, die für die Dünnschichtchromatografie üblicherweise verwendeten Plattenformate von beispielsweise 20 x 20 Zentimeter oder 20 x 10 Zentimeter in der Ausnehmung 10 der Schublade 5 zu positionieren.

In dem Gehäuse ist oberhalb der Schublade 5 ein Messkopf 12 befestigt. An einer der Schublade 5 zugewandten Unterseite des Messkopfs 12 sind eine erste Beleuchtungseinrichtung 13, eine zweite Beleuchtungseinrichtung 14 und eine zeilenförmige oder feldförmige optische Detektoreinrichtung 15 so angeordnet, dass von der ersten Beleuchtungseinrichtung 13 oder von der zweiten Beleuchtungseinrichtung 14 ausgestrahltes Licht einen unter dem Messkopf 12 befindlichen Bereich der Probenplatte 2 beleuchtet und das von der Probenplatte 2 abgestrahlte Licht von der Detektoreinrichtung 15 erfasst und aufgenommen werden kann. Die erste Beleuchtungseinrichtung 13 strahlt z.B. Licht in einem sichtbaren Wellenlängenbereich aus. Die zweite Beleuchtungseinrichtung 14 strahlt z.B. UV-Licht aus. Mit der zeilenförmig oder feldförmig erfassenden Detektoreinrichtung 15 kann sowohl Licht in sichtbaren Wellenlängenbereich als auch die durch die Anregung mit UV-Licht erzeugte sichtbare Lumineszenz erfasst und aufgezeichnet werden.

Um eine Messung durchzuführen, muss zunächst die Probenplatte 2 in die Ausnehmung 10 der Schublade 5 eingelegt und beispielweise mit Hilfe der Federzungen 11 fixiert werden. Vor dem Beginn einer ersten Aufnahme wird die zweite Beleuchtungseinrichtung 14 aktiviert und vorgewärmt. Mit einer in den Figuren 1 bis 3 nicht dargestellten Abdeckung wird die zweite Beleuchtungseinrichtung 14 abgedeckt, um zu verhindern, dass während der Aufwärmdauer und der Durchführung einer ersten Aufnahme UV-Licht auf die Probenplatte 2 fällt.

Die erste Beleuchtungseinrichtung 13 wird ebenfalls aktiviert und die noch aus dem Gehäuse 4 ausgefahrene Schublade 5 gleichmäßig in das Gehäuse 4 hineingezogen und dabei unter der Detektoreinrichtung 15 vorbeibewegt. Während des Einziehens der Schublade 5 wird die in der Ausnehmung 10 angeordnete Probenplatte 2 mit sichtbarem Licht von der ersten Beleuchtungseinrichtung 13 beleuchtet und das von der Probenplatte 2 abgestrahlte Licht von der Detektoreinrichtung 15 erfasst. Auf diese Weise wird ein erstes Messbild aufgenommen.

Nach dem die Probenplatte 2 vollständig an der Detektoreinrichtung 15 vorbeibewegt wurde, wird die erste Beleuchtungseinrichtung 13 abgeschaltet und die Abdeckung von der zweiten Beleuchtungseinrichtung 14 entfernt, sodass die Probenplatte 2 nicht mehr mit sichtbaren Licht, sondern mit UV-Licht beleuchtet wird. Zur Aufnahme des zweiten Messbildes wird die Schublade 5 mit der darin aufgenommenen Probenplatte 2 in eine entgegengesetzte Verlagerungsrichtung wieder unter der zeilenförmig oder feldförmig erfassenden Detektoreinrichtung 15 verfahren und dabei durch den Schubladenschlitz 9 aus dem Gehäuse 4 herausgefahren. Da die zweite Beleuchtungseinrichtung 14 während der Aufnahmedauer des ersten Messbildes vorgewärmt wurde, wird die Probenplatte 2 während der Aufnahme des zweiten Messbildes gleichmäßig von der zweiten Beleuchtungseinrichtung 15 beleuchtet.

Die erste Beleuchtungseinrichtung 13, die zweite Beleuchtungseinrichtung 14 und die Detektoreinrichtung 15 sind jeweils streifenförmig oder röhrenförmig ausgebildet und quer zu der mit dem Pfeil 7 angedeuteten Verlagerungsrichtung in dem Gehäuse 4 angeordnet, beziehungsweise ausgerichtet. Die erste Beleuchtungseinrichtung 13, die zweite Beleuchtungseinrichtung 14 und die Detektoreinrichtung 15 erstrecken sich mit ihren Enden bzw. mit ihrem Erfassungsbereich jeweils über die Ränder der Ausnehmung 10 in der Schublade 5 hinaus, sodass eine sehr homogene Ausleuchtung und Beleuchtungsstärke über die gesamte Fläche der Probenplatte 2 erreicht werden kann.

Um die einzelnen Messbilder möglichst präzise auswerten zu können, ist optional seitlich neben der Ausnehmung 10 ein Referenzstreifen 16 auf der Schublade 5 angebracht, der während eines Messvorgangs ebenfalls beleuchtet und zusammen mit der Probenplatte 2 in dem Messbild aufgenommen werden kann.

Anstelle eines Referenzstreifens wird bevorzugt die Helligkeit in den Bereichen, die nicht mit einer Probe beaufschlagt sind, ausgemessen und als Referenz genutzt.

Um zu vermeiden, dass während einer Messung Umgebungslicht durch den Schubladenschlitz 9 in das Gehäuse 4 eindringen und die Messergebnisse beeinträchtigen kann, und dass unbeabsichtigt UV-Licht aus dem Gehäuse 4 austritt weist der Schubladenschlitz 9 optional unterhalb der Schublade 5 einen Bürstenstreifen 17 und bevorzugt oberhalb der Schublade 5 einen Abschirmstreifen 18 auf. Der Abschirmstreifen 18 ist verschwenkbar gelagert und dient gleichzeitig als Sensoreinrichtung. Falls eine Probenplatte 2 nicht ordnungsgemäß in die Ausnehmung 10 der Schublade 5 eingelegt wurde oder sich zusätzliche Gegenstände auf einer Oberseite der Schublade 5 befinden und deshalb der schwenkbare Abschirmstreifen 18 während einer Verlagerung der Schublade 5 ausgelenkt wird, kann der Messvorgang unterbrochen und beispielsweise eine Sicherheitsabschaltung der Beleuchtungseinrichtungen 13 und 14 sowie des Antriebs vorgenommen werden.

Durch eine geeignete Beschaffenheit der Innenwand des Gehäuses können die Einflüsse des Umgebungslichtes weiter reduziert werden. Bevorzugt ist das Innere des Gehäuses schwarz, besonders bevorzugt ist es schwarz und eloxiert.

Ein berührungsempfindliches Display 19 ermöglicht eine einfache Bedienung der Vorrichtung 1 und kann gleichzeitig dazu verwendet werden, erste Informationen während der Durchführung eines Messvorgangs anzuzeigen.

In einer weiteren nicht in den Abbildungen dargestellten Ausführungsform erfolgt die Abschirmung des Umgebungslichtes bzw. des UV-Lichts nicht oder nicht nur durch Abschirmstreifen oder Abschirmbürsten sondern allein oder zusätzlich durch andere Abschirmeinrichtungen wie beispielsweise Klappen, Vorhänge etc.

Bevorzugt befinden sich die zwei oder mehr Beleuchtungseinrichtungen und die Detektoreinrichtung umfassend eine oder mehrere Sensoreinrichtungen oberhalb des Trägers in einem fixierten, nicht verschiebbaren Messkopf 12. Der Messkopf kann weiterhin Abschirmeinrichtungen sowie optische Einrichtungen enthalten, wie Spiegel oder Objektive, die die Bilderfassung unterstützen, oder auch lichtbrechende und/oder lichtstreuende Elemente, die eine homogenere Ausleuchtung ermöglichen.

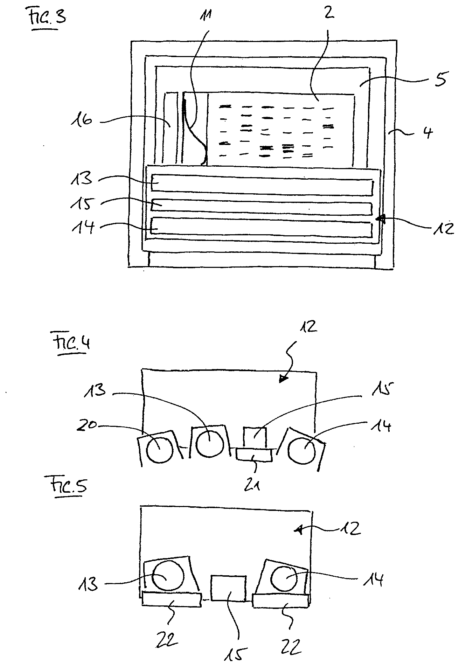

Es sind verschiedene Ausgestaltungen des Messkopfs 12 denkbar, um mit der Vorrichtung möglichst rasch verschiedene Messbilder aufnehmen zu können, die zusammen für die Auswertung der chromatografischen Trennungen einer Probenplatte 2 verwendet werden kann. In Fig. 4 ist schematisch ein Messkopf 12 dargestellt, bei dem zusätzlich zu der Detektoreinrichtung 15 sowie der ersten Beleuchtungseinrichtung 13 und der zweiten Beleuchtungseinrichtung 14 eine dritte Beleuchtungseinrichtung 20 angeordnet ist. Die erste Beleuchtungseinrichtung 13 strahlt Licht in einem sichtbaren Wellenlängenbereich ab. Die zweite Beleuchtungseinrichtung 14 ist eine Quecksilberdampflampe, die durch geeignete optische Elemente UVC-Licht mit einer Wellenlänge von typischerweise 254 nm abstrahlt oder mehrere streifenförmig angeordnete UV-LEDs. Die dritte Beleuchtungseinrichtung 20 weist eine Anzahl von streifenförmig angeordneten lichtemittierenden Dioden oder eine Quecksilberdampflampe auf, die ebenfalls in Verbindung mit geeigneten optischen Komponenten Licht mit einer Wellenlänge von typischerweise 366 nm und mit einer sehr homogenen Beleuchtungsstärke ausstrahlt.

Um zu verhindern, dass während der Vorwärmzeit der zweiten Beleuchtungseinrichtung 14 und der gleichzeitig erfolgenden Aufnahme eines ersten Messbildes UV-Licht von der zweiten Beleuchtungseinrichtung 14 von der Detektoreinrichtung 15 aufgefangen und erfasst wird, kann während des ersten Messvorgangs eine für UV-Licht undurchlässige Abschirmeinrichtung 21 die Detektoreinrichtung 15 abschirmen. Die erste Beleuchtungseinrichtung 13, die sichtbares Licht abstrahlt, und die dritte Beleuchtungseinrichtung 20 bestehend z.B. aus LEDs benötigen keine Vorwärmzeit und können jeweils für die Dauer des betreffenden Messvorgangs aktiviert und anschließend wieder abgeschaltet werden.

Bei der in Fig. 5 dargestellten Variante weist der Messkopf 12 vor der ersten Beleuchtungseinrichtung 13 und vor der zweiten Beleuchtungseinrichtung 14 jeweils eine verlagerbare Abschirmeinrichtung 22 auf, mit der die betreffende Beleuchtungseinrichtung 13, 14 abgeschirmt oder freigegeben werden kann.

Mit der erfindungsgemäßen Vorrichtung 1 können sehr rasch Messungen von chromatografischen Probenplatten 2 durchgeführt werden. Es sind jedoch auch andere Messungen mit der Vorrichtung 1 möglich, beispielsweise Qualitätsprüfungen, Partikelanalysen oder Sicherheitspigmentnachweise. Auch weitere chemische oder biologische Auswertungen beispielsweise von Gelen, Agarplatten, Teststäbchen etc. sind möglich. Probenplatten sind daher erfindungsgemäß alle von einem Träger einer erfindungsgemäßen Vorrichtung aufnehmbaren Proben, wie Dünnschichtchromatographieplatten, Gele, Agarplatten, Teststäbchen, Leiterplatten, Ätzplatinen, Gewebeschnitte, Proben aus Papier, Plastik, Metall, Mineralien, Granulat.

Bevorzugt ist die Probenplatte eine Dünnschichtchromatographieplatte. Der Träger kann eine oder mehrere Probenplatten aufnehmen.

Der Träger, z.B. in Form einer Schublade 5, kann auch vollständig aus dem Gehäuse 4 entnommen und zur Durchführung von Messungen wieder eingesetzt werden. So kann beispielsweise die Probenplatte 2 bereits vor oder während der chromatografischen Auftrennung der darauf angeordneten Proben in der Schublade angeordnet und dadurch während vorbereitender oder nachfolgender Verfahrensschritte geschützt aufbewahrt und transportiert werden.

## Patentansprüche

1. Verfahren zur optischen Erfassung einer chromatografischen Probe (3), wobei eine die Probe (3) aufweisende Probenplatte (2) in einem ersten Messschritt mit Licht einer ersten Beleuchtungseinrichtung (13) beleuchtet wird und mit einer optischen Detektoreinrichtung (15), die zeilenförming oder feldförmig abliest, das von der Probenplatte (2) abgestrahlte Licht erfasst wird und ein erstes Messbild der Probenplatte (2) aufgenommen wird, wobei die Probenplatte (2) dabei relativ zu der Detektoreinrichtung (15) in einer ersten Verlagerungsrichtung verlagert wird, und wobei in einem nachfolgenden zweiten Messschritt die Probenplatte (2) relativ zu der Detektoreinrichtung (15) in einer zweiten Verlagerungsrichtung verlagert, dabei mit der zweiten Beleuchtungseinrichtung (14) beleuchtet und ein zweites Messbild der Probenplatte (2) aufgenommen wird und wobei sich die Beleuchtungseinrichtungen (13, 14) und die Detektoreinrichtung (15) oberhalb der Probenplatte befinden und sich die Beleuchtungseinrichtungen (13, 14) über die gesamte Breite der zu beleuchtenden Probenplatte erstrecken.

2. Verfahren nach Anspruch 1, **dadurch gekennzeichnet, dass** in einem nachfolgenden dritten Messschritt die Probenplatte (2) relativ zu der Detektoreinrichtung (15) in einer dritten Verlagerungsrichtung verlagert, mit einer dritten Beleuchtungseinrichtung (20) beleuchtet und ein drittes Messbild der Probenplatte (2) aufgenommen wird

3. Verfahren nach einem oder mehreren der vorangehenden Ansprüche, **dadurch gekennzeichnet, dass** die zweite Beleuchtungseinrichtung (14) und/oder dritte Beleuchtungseinrichtung in einem Vorbereitungsschritt vor und/oder während eines vorangehenden Messschritts aktiviert wird.

4. Verfahren nach einem oder mehreren der vorangehenden Ansprüche, **dadurch gekennzeichnet, dass** während des ersten Messschritts von der zweiten Beleuchtungseinrichtung (14) erzeugtes Licht von der Probenplatte (2) abgeschirmt wird.

5. Verfahren nach einem oder mehreren der vorangehenden Ansprüche, **dadurch gekennzeichnet, dass** die zweite Verlagerungsrichtung entgegengesetzt zu der ersten Verlagerungsrichtung ist.

6. Verfahren nach einem oder mehreren der vorangehenden Ansprüche, **dadurch gekennzeichnet, dass** Informationen aus dem ersten Messbild für die Aufnahme des zweiten Messbildes verwenden werden.

7. Vorrichtung (1) zur Durchführung des Verfahrens nach Anspruch 1, mit einer Aufnahmeeinrichtung für eine Probenplatte (2) mit einer ersten Beleuchtungseinrichtung (13) und mit einer optischen Detektoreinrichtung (15), wobei die Detektoreinrichtung (15) zeilenförmig oder feldförmig abliest, wobei die Aufnahmeeinrichtung einen relativ zu der Detektoreinrichtung (15) in einer ersten und in einer zweiten Verlagerungsrichtung verlagerbaren Träger (5) zur Aufnahme der Probenplatte (2) aufweist, wobei die Detektoreinrichtung (15), die erste Beleuchtungseinrichtung (13) und eine zweite Beleuchtungseinrichtung (14) sich jeweils über die gesamte Breite einer in der Aufnahmeeinrichtung aufnehmbaren Probenplatten (2) erstrecken und die erste Beleuchtungseinrichtung (13) und die zweite Beleuchtungseinrichtung (14) sich jeweils parallel zu der zeilenförmigen oder feldförmigen Detektoreinrichtung (15) und quer zu der ersten und der zweiten Verlagerungsrichtung ausgerichtet sind und wobei die Detektoreinrichtung (15) und die Beleuchtungseinrichtungen (13, 14) weniger als 100 mm oberhalb des Trägers (5) angeordnet sind.

8. Vorrichtung (1) nach Anspruch 7, **dadurch gekennzeichnet, dass** der Träger eine Schublade (5) ist.

9. Vorrichtung (1) nach Anspruch 7 oder Anspruch 8, **dadurch gekennzeichnet, dass** während einer Aufnahme eines Messbildes ein Wellenlängenteilbereich von der Probenplatte (2) abgeschirmt wird.

10. Vorrichtung (1) nach Anspruch 8, oder nach Ansprüchen 9 und 8, **dadurch gekennzeichnet, dass** die Vorrichtung (1) ein Gehäuse (4) aufweist, in dem die erste Beleuchtungseinrichtung (13) und die zweite Beleuchtungseinrichtung (14), die optische Detektoreinrichtung (15) und die Antriebseinrichtung (6) für die Schublade (5) angeordnet sind, und dass das Gehäuse (4) einen Schubladenschlitz (9) aufweist, durch den hindurch die Schublade (5) teilweise aus dem Gehäuse (4) herausgefahren und in das Gehäuse (4) eingefahren werden kann.

11. Vorrichtung (1) nach Anspruch 10, **dadurch gekennzeichnet, dass** der Schubladenschlitz (9) eine Sensoreinrichtung zum Erfassen der Probenplatte (2) aufweist.

12. Vorrichtung (1) nach Anspruch 10 oder Anspruch 11, **dadurch gekennzeichnet, dass** das Gehäuse (4) auf einer dem Schubladenschlitz (9) gegenüberliegenden Gehäuseseite einen Austrittsschlitz für die Schublade (5) aufweist.

13. Vorrichtung (1) nach einem der Ansprüche 7 bis 12, **dadurch gekennzeichnet, dass** die Detektoreinrichtung (15) zwischen der ersten Beleuchtungseinrichtung (13) und der zweiten Beleuchtungseinrichtung (14) angeordnet ist.

## Claims

1. Method for the optical scanning of a chromatographic sample (3), in which, in a first measurement step, a sample plate (2) holding the sample (3) is illuminated with light from a first illumination device (13) and the light emitted by the sample plate (2) is detected by means of an optical detector device (15) which reads line by line or field by field and a first measurement image of the sample plate (2) is recorded, during which the sample plate (2) is displaced in a first displacement direction relative to the detector device (15), and in which, in a subsequent second measurement step, the sample plate (2) is displaced in a second displacement direction relative to the detector device (15) while being illuminated by means of the second illumination device (14) and a second measurement image of the sample plate (2) is recorded and where the illumination devices (13, 14) and the detector device (15) are located above the sample plate and the illumination devices (13, 14) extend over the entire width of the sample plate to be illuminated.

2. Method according to Claim 1, **characterised in that**, in a subsequent third measurement step, the sample plate (2) is displaced in a third displacement direction relative to the detector device (15), illuminated by means of a third illumination device (20) and a third measurement image of the sample plate (2) is recorded.

3. Method according to one or more of the preceding claims, **characterised in that** the second illumination device (14) and/or third illumination device is activated in a preparation step before and/or during a preceding measurement step.

4. Method according to one or more of the preceding claims, **characterised in that** light generated by the second illumination device (14) is screened off from the sample plate (2) during the first measurement step.

5. Method according to one or more of the preceding claims, **characterised in that** the second displacement direction is opposite to the first displacement direction.

6. Method according to one or more of the preceding claims, **characterised in that** information from the first measurement image is used for the recording of the second measurement image.

7. Device (1) for carrying out the method according to Claim 1, having a holder for a sample plate (2) having a first illumination device (13) and having an optical detector device (15), where the detector device (15) reads line by line or field by field, where the holder has a carrier (5) for accommodation of the sample plate (2) which can be displaced in a first displacement direction and in a second displacement direction relative to the detector device (15), where the detector device (15), the first illumination device (13) and a second illumination device (14) each extend over the entire width of a sample plate (2) which can be accommodated in the holder and the first illumination device (13) and the second illumination device (14) are each orientated parallel to the line-by-line or field-by-field detector device (15) and perpendicular to the first and second displacement directions and where the detector device (15) and the illumination devices (13, 14) are arranged less than 100 mm above the carrier (5).

8. Device (1) according to Claim 7, **characterised in that** the carrier is a drawer (5).

9. Device (1) according to Claim 7 or Claim 8, **characterised in that** a wavelength part-range is screened off from the sample plate (2) during a recording of a measurement image.

10. Device (1) according to Claim 8 or Claims 9 and 8, **characterised in that** the device (1) has a housing (4) in which the first illumination device (13) and the second illumination device (14), the optical detector device (15) and the drive device (6) for the drawer (5) are arranged, and **in that** the housing (4) has a drawer slot (9) through which the drawer (5) can be partly moved out of the housing (4) and can be moved into the housing (4).

11. Device (1) according to Claim 10, **characterised in that** the drawer slot (9) has a sensor device for detecting a sample plate (2).

12. Device (1) according to Claim 10 or Claim 11, **characterised in that** the housing (4) has an exit slot for the drawer (5) on a housing side opposite the drawer slot (9).

13. Device (1) according to one of Claims 7 to 12, **characterised in that** the detector device (15) is arranged between the first illumination device (13) and the second illumination device (14).

## Revendications

1. Procédé pour le scannage optique d'un échantillon chromatographique (3), dans lequel, lors d'une première étape de mesure, une plaque à échantillon(s) (2) qui contient l'échantillon (3) est éclairée à l'aide d'une lumière qui provient d'un premier dispositif d'éclairage (13) et la lumière qui est émise par la plaque à échantillon(s) (2) est détectée au moyen d'un dispositif de détecteur optique (15) qui effectue une lecture ligne par ligne ou zone par zone, et une première image de mesure de la plaque à échantillon(s) (2) est enregistrée, opération pendant laquelle la plaque à échantillon(s) (2) est déplacée dans une première direction de déplacement par rapport au dispositif de détecteur (15), et procédé selon lequel, lors d'une deuxième étape de mesure subséquente, la plaque à échantillon(s) (2) est déplacée dans une deuxième direction de déplacement par rapport au dispositif de détecteur (15) tandis qu'elle est éclairée au moyen du deuxième dispositif d'éclairage (14) et une deuxième image de mesure de la plaque à échantillon(s) (2) est enregistrée et dans lequel les dispositifs d'éclairage (13, 14) et le dispositif de détecteur (15) sont localisés au-dessus de la plaque à échantillon(s) et les dispositifs d'éclairage (13, 14) s'étendent au-dessus de la totalité de la largeur de la plaque à échantillon(s) qui doit être éclairée.

2. Procédé selon la revendication 1, **caractérisé en ce que**, lors d'une troisième étape de mesure subséquente, la plaque à échantillon(s) (2) est déplacée dans une troisième direction de déplacement par rapport au dispositif de détecteur (15), elle est éclairée au moyen d'un troisième dispositif d'éclairage (20) et une troisième image de mesure de la plaque à échantillon(s) (2) est enregistrée.

3. Procédé selon une ou plusieurs des revendications qui précèdent, **caractérisé en ce que** le deuxième dispositif d'éclairage (14) et/ou le troisième dispositif d'éclairage sont/est activé(s) au niveau d'une étape de préparation avant et/ou pendant une étape de mesure précédente.

4. Procédé selon une ou plusieurs des revendications qui précèdent, **caractérisé en ce que** la lumière qui est générée par le deuxième dispositif d'éclairage (14) est évacuée par filtrage hors de la plaque à échantillon(s) (2) pendant la première étape de mesure.

5. Procédé selon une ou plusieurs des revendications qui précèdent, **caractérisé en ce que** la deuxième direction de déplacement est opposée à la première direction de déplacement.

6. Procédé selon une ou plusieurs des revendications qui précèdent, **caractérisé en ce qu'**une information en provenance de la première image de mesure est utilisée pour l'enregistrement de la deuxième image de mesure.

7. Dispositif (1) pour mettre en oeuvre le procédé selon la revendication 1, comportant un moyen de support pour une plaque à échantillon(s) (2), lequel comporte un premier dispositif d'éclairage (13) et lequel comporte un dispositif de détecteur optique (15), dans lequel le dispositif de détecteur (15) effectue une lecture ligne par ligne ou zone par zone, dans lequel le moyen de support comporte un moyen de contenance et de support (5) pour la réception de la plaque à échantillon(s) (2), laquelle peut être déplacée dans une première direction de déplacement et dans une deuxième direction de déplacement par rapport au dispositif de détecteur (15), dans lequel le dispositif de détecteur (15), le premier dispositif d'éclairage (13) et un deuxième dispositif d'éclairage (14) s'étendent chacun au-dessus de la totalité de la largeur de la plaque à échantillon(s) (2), laquelle peut être logée dans le moyen de support, et le premier dispositif d'éclairage (13) et le deuxième dispositif d'éclairage (14) sont chacun orientés parallèlement au dispositif de détecteur ligne par ligne ou zone par zone (15) et perpendiculairement aux première et deuxième directions de déplacement et dans lequel le dispositif de détecteur (15) et les dispositifs d'éclairage (13, 14) sont agencés à moins de 100 mm au-dessus du moyen de contenance et de support (5).

8. Dispositif (1) selon la revendication 7, **caractérisé en ce que** le moyen de contenance et de support est un compartiment formant tiroir (5).

9. Dispositif (1) selon la revendication 7 ou la revendication 8, **caractérisé en ce qu'**une plage partielle de longueurs d'onde est évacuée par filtrage hors de la plaque à échantillon(s) (2) pendant un enregistrement d'une image de mesure.

10. Dispositif (1) selon la revendication 8 ou les revendications 9 et 8, **caractérisé en ce que** le dispositif (1) comporte un logement (4) dans lequel le premier dispositif d'éclairage (13) et le deuxième dispositif d'éclairage (14), le dispositif de détecteur optique (15) et le dispositif d'entraînement (6) pour le compartiment formant tiroir (5) sont agencés, et **en ce que** le logement (4) comporte une fente de tiroir (9) au travers de laquelle le compartiment formant tiroir (5) peut être partiellement déplacé pour son extraction hors du logement (4) et peut être déplacé pour son positionnement à l'intérieur du logement (4).

11. Dispositif (1) selon la revendication 10, **caractérisé en ce que** la fente de tiroir (9) comporte un dispositif de capteur pour détecter une plaque à échantillon(s) (2).

12. Dispositif (1) selon la revendication 10 ou la revendication 11, **caractérisé en ce que** le logement (4) comporte une fente de sortie pour le compartiment formant tiroir (5) sur un côté de logement qui est opposé à la fente de tiroir (9).

13. Dispositif (1) selon l'une des revendications 7 à 12, **caractérisé en ce que** le dispositif de détecteur (15) est agencé entre le premier dispositif d'éclairage (13) et le deuxième dispositif d'éclairage (14).
